# EUROPEAN PATENT SPECIFICATION

(11) **EP 0 733 092 B1**
(45) Date of publication and mention of the grant of the patent: **06.08.1997**
(21) Application number: 95903138.6
(22) Date of filing: 16.11.1994
(51) Int. Cl.: C10J 3/57

(54) **IMPROVED MOLTEN METAL DECOMPOSITION APPARATUS AND PROCESS**
VERBESSERTE VORRICHTUNG UND VERFAHREN ZUR ZERSETZUNG MITTELS EINES METALLSCHMELZBADES
APPAREIL ET PROCEDE PERFECTIONNES DE DECOMPOSITION DE METAUX EN FUSION

(30) Priority: 07.12.1993 US 163468
(43) Date of publication of application: 25.09.1996
(73) Proprietor: ASHLAND INC., Ashland, KY 41114 (US)
(72) Inventor: MALONE, Donald, P., Grayson, KY 41143 (US); MILLER, Charles, B., Ashland, KY 41101 (US); WISEMAN, Jonathan, A., Pedro, OH 45659 (US)
(74) Representative: Thomas, Roger Tamlyn
(86) International application number: US9413421
(87) International publication number: WO9516010

(56) References cited:
- WO-A-94/04633
- DE-A- 2 443 740
- FR-A- 2 316 319
- FR-A- 2 552 443
- GB-A- 2 088 892
- PATENT ABSTRACTS OF JAPAN vol. 5, no. 24 (C-43) (696) & JP,A,55 149 388 (SUMITOMO) 13 February 1981

## Description

### Background of the Invention

### Field of the Invention:

The present invention relates to the general field of molten baths for the disassociation of material containing carbon, and preferably hydrogen as well.

### Description of the Prior Art:

U.S. (Patent) 4,187,672 and U.S. (Patent) 4,244,180 to Rasor feed a mass of carbonaceous fuel; e.g., coal, into a high temperature liquid; e.g., molten iron, at a temperature high enough to carbonize the feed; e.g., near 2850°F (1565° C), introduce air or other oxygen source into the reactor to react with carbon dissolved in the liquid and use the hot fuel gas to produce useful energy.

WO 92/01492 to Nagel teaches two immiscible zones (layers) of different molten metal temperatures.

Mayes U.S. 4,338,096 teaches methods for controlling the flow of molten-mass reaction medium into a reaction zone by utilizing a gas-lift effect on the molten medium and apportioning the flow of control gas to the desired flow of molten medium. Mayes does not suggest movement of liquid from one zone to another by means of convection.

Bach U.S. 4,574,714, and U.S. 4,602,574 do not suggest the plural zones of the present invention with organic feed introduced into one zone and oxidizer introduced into a second zone, and with the vapor phases and liquid phases of the two zones being separated by barriers as in the apparatus of the present invention.

Tyrer U.S. 1,803,221 teaches production of hydrogen from methane in a two-zone unit, but provides no means for flow by convection between the two zones and does not suggest the baffle separators used in the apparatus of the present invention.

Axelsson U.S. 4,511,372 does his whole process in a single vessel at high pressure, primarily to suppress dust.

The lance of the present invention can be distinguished from the conventional tuyeres commonly used in steel making, in that the tuyeres are submerged beneath the molten steel and do not pass through any substantial portion of the molten steel. Further, the tuyeres are generally used for introducing oxygen, argon, and other gases, whereas the present lances are particularly used for introducing feed materials which contain hydrocarbons which can cause substantial coking. Therefore, it is a particular objective of the present invention to substantially reduce the amount of coking formed within the conduit or lance of the invention. This reduces the plugging difficulty which is often encountered with lances operating at these high temperatures, particularly when the lances are injecting liquids comprising hydrocarbons.

### Summary of the Invention

### General Statement of the Invention:

The invention provides a process as set out in Claim 1 below and an apparatus as set out in Claim 10 below, certain preferred features being set out in the dependent claims. The drawings illustrate preferred embodiments of the invention which will now be briefly discussed.

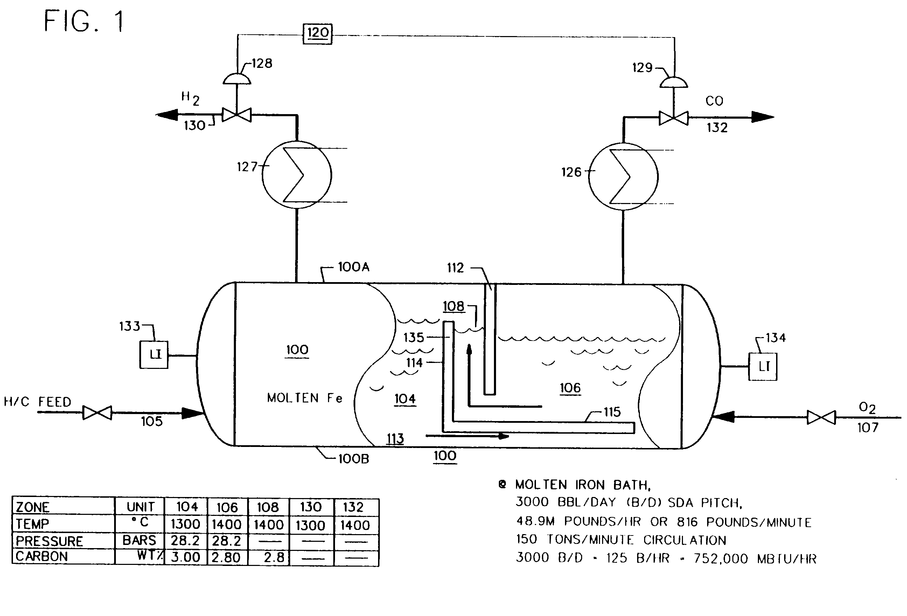

Referring to Figure 1, a vessel having top and bottom walls a feed zone and an oxidizing zone and containing a molten bath to levels **116, 118** respectively for the decomposition of carbon- (and preferably hydrogen-) containing materials is improved by providing upwardly extending submerged baffle means **114** above the bottom wall abutting the feed zone and defining one wall of a recycle zone (chimney) **108** communicating between liquid in the oxidizing zone and in the feed zone. The apparatus also comprises horizontal extending baffle means **115** above the bottom wall. The horizontally extending submerged baffle means **115** is integral with a lower portion of the downwardly extending baffle means **114** and arranged so as to define the lower end of a generally L-shaped recycle zone **108**, much as a hearth is arranged beneath a chimney. The apparatus further comprises vapor zone separator or baffle means **112**; the vapor zone separator means separates the vapor space above the liquid baths so that the vapor space of the feed zone is separated from the vapor space of the oxidizing zone. This vapor zone separator means **112** abuts the oxidizing zone and extends downward into the liquid of the oxidizing zone to define the other wall of said chimney of the recycle zone **108**, but not sufficiently far so as to contact the horizontal extending baffle means **115**.

### Apparatus:

Closed vessel **100:** The vessel includes a top wall **100A** and a bottom wall **100B** and is preferably lined with brick or castable refractories and may be pre-stressed to maintain the refractories in compression even when the vessel is pressurized and hot.

Downwardly extending baffle means **114** and horizontal extending baffle means **115** can be made of refractory materials or even of tungsten, tantalum, or other high-melting refractory metal which may be coated with refractory ceramics.

Vapor zone separator means **112** will preferably be of the same material as downwardly extending baffle means **114**, and will preferably be hermetically attached to the top wall of closed vessel **100**.

Oxidizer feed means **107** can be any suitable tuyere design, well-known in the steel-making industry.

Feed inlet **105** can operate by gravity or pump (high pressure pump if the vessel operates under pressure).

### Fischer-Tropsch Synthesis

The preferred CO and H₂ products are useful for the conventional Fischer-Tropsch synthesis taught e.g., in Chemical Process Industries by R. Norris Schreve, McGraw-Hill, 1967, p. 775.

### Boudouard Reaction:

This reaction, discussed in U.S. 4,412,914, 4,450,241, 4,869,879, and 4,915,820 all to W. P. Hettinger et al, reacts injected CO₂ with carbon in the molten metal to form 2CO and cool the melt as desired.

### Metal:

While iron is most preferred for specialized applications, copper, zinc, especially chromium, manganese, or nickel, or other meltable metal in which carbon is somewhat soluble, may be used alone or in mixture.

### Feed Materials:

Natural gas (CH₄), liquified petroleum gas (LPG), propane, petroleum naphtha, light or heavy distillate, vacuum and other resids, solvent de-asphalted pitch (SDA), aromatic extracts, FCC slurry oil; trash garbage, tires, coal and virtually any other hydrocarbon-containing material.

### Products:

Products are CO, CO₂, H₂ plus sulfur and other contaminants in feed which may be outputted in slag which can be periodically drained off. In refineries, sulfur is preferably outputted as gas in the hydrogen stream and is then treated conventionally by the Claus process and the SCOT (Shell Claus Offgas Treatment) unit.

### Controls:

Conventional analog or digital controls are used, measuring temperature, preferably with optical or infrared pyrometer or protected thermocouple; carbon by spectrometer; level by nuclear radiation and admitting feed, CH₃, CO₂, H₂O to maintain temperature, which must, of course, be high enough (e.g., at least 1,250°C in feed zone, 1,300° C in oxidizing zone) to maintain the particular metal carbon composition liquid and dissolved carbon level and H₂ production within preset limits. Temperature is preferably 1,150° to 1,600°, more preferably 1,250° to 1,500°, and most preferably 1,300° to 1,450°C in the feed zone, and usually preferably 50° to 150°C higher in the oxidation zone.

### Batch/Continuous Operation:

While the Examples describe the invention on a continuous basis, it may, of course, be practiced on a batch or semi-batch basis with discontinuous flows of starting materials into the molten-metal vessel and with intermittent withdrawal of slag and/or product gases.

### Flexibility:

Wide ranges of feed rate, feed composition, and contaminants can be accommodated, even wide swings over short time intervals.

### Utility of the Invention:

The present invention is useful for the production of a wide variety of end-products, including all those which can be produced by the well-known Fischer-Tropsch process, e.g., naphthas, diesel fuel, jet fuel (kerosene), as particularly commercialized by Sasol in South Africa. The Mobil Oil "M-Gas" process (U.S. 3,998,899, etc.) may be employed. At the present time, the invention will be particularly valuable for the flexible production of reformulated fuels as mandated or as desirable for protection of the environment, e.g., methanol, methyl tertbutyl ether (MTBE) and tert amyl ether (TAME), etc. In its preferred embodiments, the invention functions entirely from distress or low-valued hydrocarbons, air (for oxidation), and water (to supply hydrogen and additional oxygen). It is particularly noteworthy that the invention can utilize the exothermic carbon oxidation reaction so that it can function without need for external energy input. Additionally, the endothermic Boudouard reaction (CO₂ + C → 2CO) can be used to control temperature within the two reaction zones, and particularly to control the differentials so as to adjust convection circulation of materials between the zones as desired.

Syngas uses, per Kirk-Othmer, CO/H₂ without any other reactants as building blocks, e.g., glycol synthesis, modified Fischer-Tropsch syntheses to olefins or waxes, and acetic acid synthesis; those involving

CO/H₂ and employed to make additional use of compounds derived from synthesis gas, e.g., homologation of methanol to ethanol; those that use a deravative based on CO/H₂, e.g., methanol, as a starting material for a further reaction sequence, e.g., Mobil's MTG (methanol to gasoline) process or the vinyl acetate process; and energy-efficient processes, e.g., those that make syngas for use in combined-cycle plants; and those that use the carbon monoxide for subsequent syntheses, e.g., of acetic anhydride, acrylates, Koch acids, etc.

### Brief Description of the Figures

Figure 1 is a schematic diagram of a section view of the closed vessel **100** showing the feed zone **104** and the oxidizing zone **106** separated by the chimney/hearth-like recycle zone **108** defined by downwardly extending baffle means **114**/horizontal extending baffle means **115** and vapor zone separator means **112**, along with the vessel **100**. Figure 1 shows the other elements suitable for operation in combination with the lance of the invention, but does not show the lance itself.

Figure 2 is a detail of Figure 1 showing the baffles **135** and **136.**

Figure 3 is a schematic diagram showing the optional water-gas shift reactor **60**, Fisher-Tropsch reactor **64,** the optional Boudouard reactor **80** which occurs in the molten bath oxidizing zone **106**, and the removal of carbon dioxide by means of the Benfield or Pressure Swing Absorption processes. Figure 3 shows schematically the other elements suitable for working in conjunction with the lance of the present invention, but does not show the lance itself.

Figure 4 shows a preferred lance, with the lance in place as element 205 impinging on the surface of the liquid so as to depress it and actually pierce it, forming bubbles.

Figure 5 is a schematic of a more preferred lance.

Figure 5A is a cross sectional area at section AA of the lance, and Figure 5B is a cross-sectional detail of the lance tip.

Figure 6 is a schematic of a slanted lance which may be above the molten surface or can preferably extend into the molten bath.

### Description of the Preferred Embodiments

Referring to Figure 1, the main vessel (a refractory-lined steel vessel **100**) encloses and partially defines feed zone **104**, oxidizing zone **106**, lower circulation zone **113**, and L-shaped recycle zone **108**. Feed zone **104** receives feed through feed inlet **105**. Oxygen enters through oxidizer feed means **107** into oxidizing zone **106**. Oxidizing zone **106** and recycle zone **108** are controlled by pressure control means **120** which acts on control valve **128** and control valve **129** to throttle H2 outlet **130** and CO outlet **132** differentially as desired. Cooler **127** and cooler **126** protect control valve **128** and control valve **129** by cooling the products. Level controllers **133** and level controller **134** control the level in the feed and in the oxidizing zone, respectively, and feed signals to pressure control means **120** to maintain those levels.

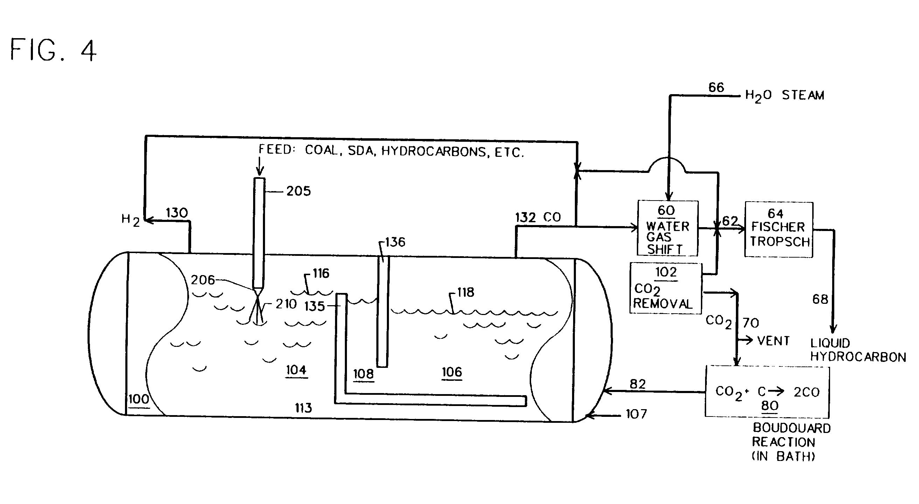

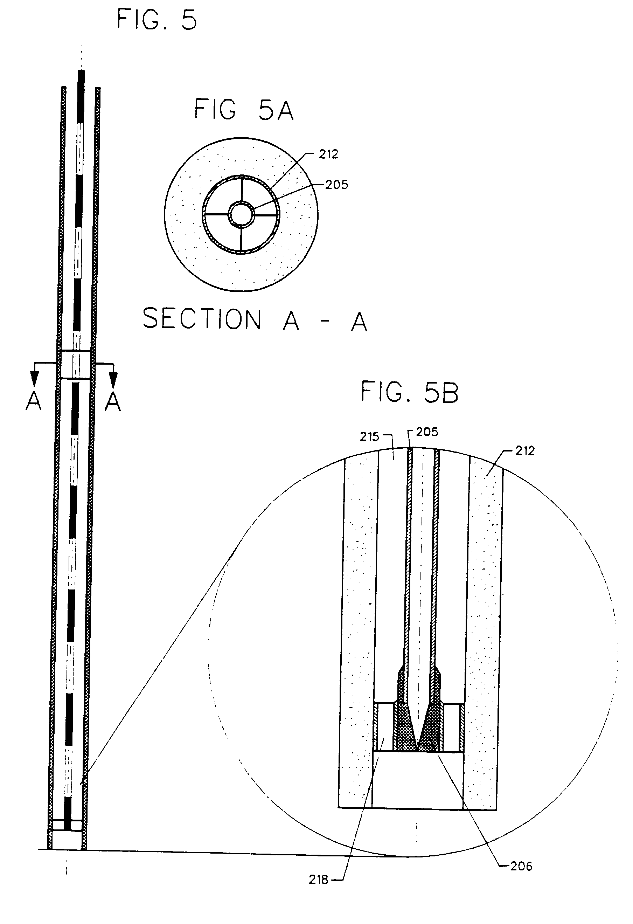

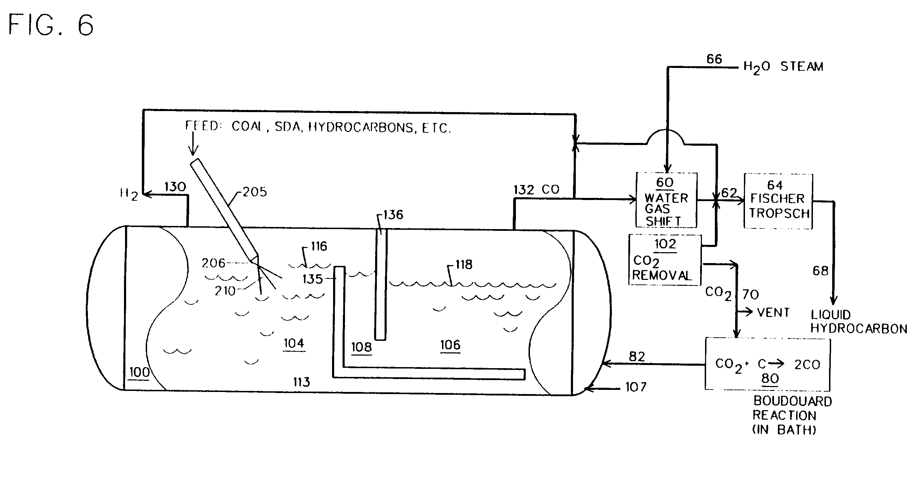

As shown schematically in Figures 4 and 6, the feed 105 will preferably be directed downwardly with sufficient force to pierce the surface (or penetrate through a portion of the depth) of the molten metal bath 104, more preferably with sufficient force to cause bubbling and mixing of the feed with the liquid metal bath, and most preferably will extend below the molten surface. Figure 4 shows a preferred lance and shows the lance in place as element 205 impinging on the surface of the liquid so as to depress it and actually pierce it, forming bubbles. Figure 5 is a schematic of a more preferred lance. Figure 5A is a cross sectional area at section AA of the lance, and Figure 6B is a cross-sectional detail of the lance tip.

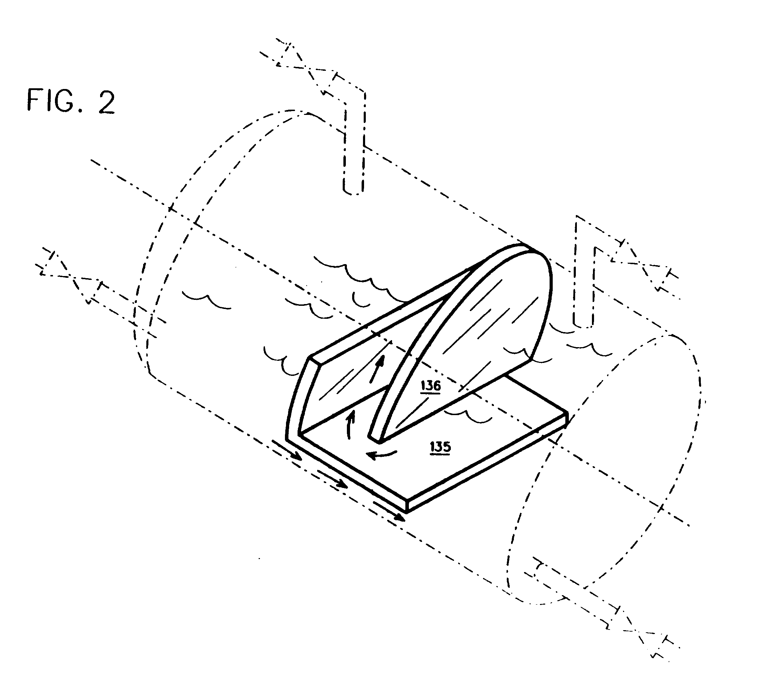

Figure 2 is a detail of the baffles. Baffle **135** and baffle **136** are shown in more detail in Figure 2. Note that baffle **135** has both a horizontal and a vertical projection, whereas baffle **136** is primarily vertical in its projection and is sealed hermetically to the edges of refractory-lined steel vessel **100** to effectively separate the gas spaces above the feed zone and the oxidizing zone. Together, baffle **135** and baffle **136** define lower circulation zone **113**, recycle zone **108**, and additionally separate the two gas phases as mentioned above. The recycle zone **108** is particularly formed by a hearth-like substantially horizontal projection of baffle **135** and the vertical projection of baffle **135** acts with baffle **136** to form a chimney-like vertical section to the recycle zone **108.** This configuration is an important feature of the apparatus because it provides the necessary circulation which moves the carbon first through lower circulation zone **113** from the feed zone to the oxidizing zone **106** after feed zone **104,** thence through recycle zone **108** after the carbon has been largely removed in the oxidizing zone closed vessel **100.**

In operation, the apparatus of Figure 1 has a temperature of approximately 1300°C in feed zone **104**, 1400°C in oxidizing zone **106**, and emits hydrogen and CO at approximately those temperatures, respectively. Pressure within closed vessel **100** is preferably from 0 to 50 bars, more preferably from 0.1 to 40 bars, and most preferably from 1 to 25 bars above atmospheric, though higher pressures, even as high as **100** bars can be utilized with special construction if desired for special circumstances.

The feed will generally be fed from a source at ambient temperature, or in any case at much lower temperature than the temperature of the molten bath. Generally, keeping the feed material as cool as possible as it approaches the high temperature of the bath will be desirable to avoid coking within the feed lance. This will generally be accomplished by maintaining a velocity within the conduit in the range of from about 1-10 meters per second, and sizing the conduit so the residence time of said feed material in said conduit is from about 0.1-10 seconds. In general, this will keep the temperature in the conduit through which the feed material is flowing below about 315°C (about 600°F), more preferably below about 200°C (below about 400°F).

Feed zone **104**, preferably contains about 0 to 4.3%, more preferably about 1 to 4%, and most preferably 3% carbon. The carbon content in oxidizing zone **106** is an amount less than in feed zone **104** determined by the circulation rate of the molten metal and the feed rate of carbon to the feed zone. The vessel is a conventional refractory-lined design of steel suitable for the temperature and other surface conditions. The oxygen source is preferably 99.9% oxygen distilled from an oxygen plant operating on air (not shown) but may be air where the additional nitrogen is tolerable.

Referring now to Figure 4, lance 205 is shown entering through the upper portion of vessel 100 and is directed downwardly toward, or preferably extending below the liquid surface of molten bath 104, ending in communication with nozzle 206 which forms a jet 210 of fluid directed downwardly toward the surface of molten bath 100 so as to depress the surface. Preferred embodiments would be feed materials flowing through conduit 205 will have sufficient velocity to actually penetrate below the surface of bath 104 to a depth of 3-100 cm (1-36 inches) below the nozzle tip and cause bubbling, and to reduce coke formation in the conduit. This can be achieved by using a nozzle 206 sufficiently small, as compared to the quantity of feed material fed to the conduit 205, to provide a velocity of the feed material leaving the nozzle in the range of from about 30-300, more preferably about 80-250, and most preferably about 100-200 meters per second (about 100 to 1000, more preferably 250 to 820, and most preferably 325 to 660 feet per second).

It is also desirable to feed liquid feed material through the conduit 205 under a sufficient pressure to prevent the feed material from vaporizing in the conduit which can cause two-phase sputtering and reduce the flow capacity of the conduit 205.

The conduit 205 is jacketed with a jacket 212, preferably coaxially (concentric) with the conduit 205. Still more preferably, the conduit (lance) 205 can be surrounded by insulation shown in Figure 5A as surrounding the jacket to reduce quantities of coolant required to maintain the temperature in the conduit below a minimum temperature to avoid decomposition and/or vaporization in the conduit.

Preferred insulation materials are magnesium oxide or aluminum oxide (alumina) powder or fibers, spinels (mixtures of magnesium oxide and aluminum oxide); preferred materials for the conduit itself are refractory metals, e.g. tantalum, and superalloys such as Inconel™ 625; and preferred materials for the jacket are silicon nitride, alumina, and boron nitride; preferred coolant materials to flow through the annular space 215 include argon, steam, and methane. In a particularly preferred design shown in Figure 5B, the coolant material itself is ejected axially around the feed material being ejected from nozzle 206 through openings 218, so that the coolant substantially surrounds the feed material exiting from the nozzle and directed toward the surface of the molten bath.

Note that the conduit need not be entirely vertical, it may be slanted or bent or curved so as to provide a horizontal component to the jet 210 impinging on (or below) the surface of the molten bath, as shown in Figure 6. This horizontal component can be valuable in enhancing the circulation of the molten metal from the oxidizing zone to the oxidizing zone by flowing under baffle 135. Figure 6 shows a slanted conduit and jacket assembly (similar to that shown in detail in Figures 5, 5A, and 5B), but slanted so as to direct some of its force in a horizontal direction and cause fluid from molten bath **104** to more quickly circulate under baffle **135**. (The conduit can also be slanted toward one side of the molten bath so as to cause circulation along one wall of the molten bath, and the baffle **135** can provide a larger lower opening at the point struck by flow from the lance, to further enhance circulation.)

In particularly preferred embodiments, the feed material is liquid, and the process further comprises controlling the pressure drop across the nozzle to at least about 1370 K Pa (200psi), and maintaining the liquid velocity at about 50 meters (150 feet) per second.

Further preferred embodiments comprise injecting the feed materials through a substantially downwardly directed conduit passing through a wall of the vessel containing the molten bath and communicating with a nozzle beneath the surface of the bath, and to cause mixing of the materials with the bath beneath the surface.

In a further preferred embodiment, the conduit can be insulated or cooled to reduce the increase in temperature of the feed materials so said feed materials flow through said conduit and said nozzle to reduce the coking of the hydrocarbon content of the feed materials.

An optional preferred embodiment is to recycle a portion of carbon dioxide made by oxidizing a portion of the product CO to CO₂, back to the metal bath by injecting at a point where the molten metal contains substantial quantities of dissolved carbon, so that the dissolved carbon reacts with the CO₂ to form approximately two moles of CO for each mole of CO₂ thereby cooling the bath.

Various feeds are described under the following examples.

### EXAMPLES

### Example I

### Invention Operating on Solvent De-asphalted Bottoms (SDA)

The feed rate is 22.3 tonnes/hour of SDA bottoms. The molten iron circulation is 9,000 tonnes/hour through recycle zone **108** and 1.75 tonnes/hour of hydrogen are emitted through H₂ outlet **130** and 43.8 tonnes/hour of CO are emitted through CO outlet **132**. The results for this and other Examples are shown in Table A.

### Example II

### Invention with Methane Heat Balance

The procedure of Example I is followed except that methane is added to the feed for heat balance. The ratio of hydrogen to carbon monoxide in the product gas is approximately 1:1 on a molar basis.

### Example III

### Invention With Steam Heat Balance

The procedure of Example I is followed, except that steam is added to the feed for heat balance. The ratio of hydrogen to carbon monoxide in the product gas is approximately 1:1 on a molar basis.

### Example V

### Coal Feed to Invention

The procedures of Example I are followed except that the feed is coal and the approximate molar ratio of carbon monoxide to hydrogen is 3:1 and except that 20,000 Kg/hour (44,000 pounds/hour) of steam are injected through oxidizer feed means **107** along with 10,000 Kg/hour (22,500 pounds/hour) of oxygen.

### Example VI

### Trash Fed to Invention

The procedures of Example I are followed except that the feed is mixed non-metallic trash (largely waste paper) and garbage (largely organic food residue), which is dried by using heat from the process, and the molar ratio of carbon monoxide to hydrogen is approximately 1:1.

### Example VII

### Methylene Chloride Disposal and Other Chlorinated Organics

The procedure of Example I is followed except that the feed is methylene chloride, which has been contaminated and has no commercial value but represents a substantial disposal problem. Carbon monoxide and hydrogen are produced in a molar ratio of approximately 1:1.5. To neutralize the chlorine and avoid toxic emissions, .91Kg (2 pounds) of slaked lime CaO per pound of methylene chloride is added near the top surface of feed zone liquid level **116** and oxidizing zone liquid level **118**, and 1.14Kg (2.5 pounds) of slag per pound of methylene chloride is permitted to flow outward through an outlet (not shown) which skims the surface of feed zone liquid level **116** and oxidizing zone liquid level **118.** The slag comprises largely CaCl₂.

### Example VIII

### Invention with Fischer-Tropsch Synthesis

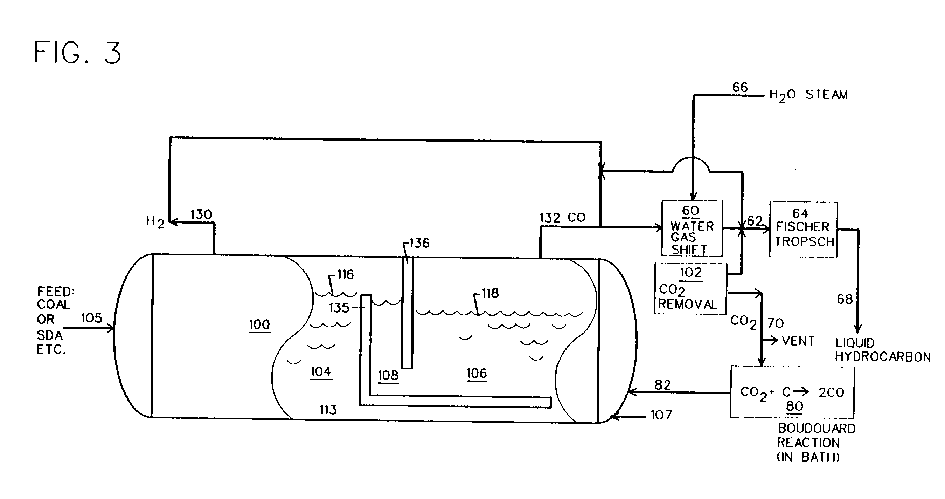

As shown in Figure 3, Example I is continued and some of the carbon monoxide produced is mixed with steam **66** reacted to produce CO₂ + H₂ in water-gas shift reactor **60**. The carbon dioxide is separated from hydrogen in CO₂ removal closed vessel **102.** This hydrogen and hydrogen from H₂ outlet **130** are mixed with the remaining CO. Then the syngas **62** is reacted in Fisher-Tropsch reactor **64** to produce Fisher-Tropsch liquids **68**. The Fischer-Tropsch liquids comprise naphtha, kerosene, and diesel fuel. By varying conditions of the Fischer-Tropsch process according to well-known techniques, the product distribution may be varied to favor naphtha or diesel, at will.

### Example IX

### Invention with Fischer-Tropsch and Boudouard

When the process of Example VI is repeated, the CO₂ by-product from water-gas shift reactor **60** is fed to zone **106**; it reacts with carbon dissolved in the molten metal to form two moles of CO for each mole of CO₂ fed to zone **106.**

### MODIFICATIONS

Specific compositions, methods, or embodiments discussed are intended to be only illustrative of the invention disclosed by this specification. Variations of these compositions, methods, or embodiments are readily apparent to a person of skill in the art based upon the teachings of this specification and are therefore intended to be included as part of the inventions disclosed herein.

Reference made above to any other specification or literature is intended to result in such patents or literature being expressly incorporated herein by reference.

**TABLE A**

| **(Tonnes/Hour)** | | | | | | |
|---|---|---|---|---|---|---|
| **Example** | **Feed, 105** | **Oxygen, 107** | **H**_{**2**}**, 130** | **CO, 132** | **Molten Metal Circulation, 108** | **Methanol by F-T Prod** |
| I | SDA 22.3 | 25.0 | 1.75 | 43.8 | 9,000 | 25.9 |
| II | Methane *24.2 | 50 | 6.4 | 87.5 | 18,000 | 67.3 |
| III | Steam *16.3 | 10.2 | 3.5 | 43.3 | 9,000 | 35.0 |
| IV | CO₂ *39.8 | 10.6 | 1.75 | 69.1 | 9,000 | 35.6 |

| | | | | | | |
|---|---|---|---|---|---|---|
| * plus same SDA as in Example I | | | | | | |

## Claims

1. A process for decomposing carbon- and hydrogen-containing feed material in a molten metal bath comprising: injecting said carbon- and hydrogen-containing feed material through a lance into said molten bath, dissolving carbon in said metal bath, and injecting oxygen to create a carbon monoxide stream comprising CO from said dissolved carbon; wherein said step of injecting said feed material into said bath comprises injecting said feed material substantially downwardly through a lance, which has a lower end projecting into said bath, under sufficient pressure so as to cause mixing of said feed material within said molten metal below the surface of said bath; wherein said feed material is injected through a nozzle within said lance located below the surface of the bath, wherein said nozzle is provided within a conduit which is substantially jacketed, and wherein said process further comprises flowing a cooling medium through said jacket so as to substantially cool said conduit and said material flowing therein to prevent coking of any hydrocarbon content of the feed material within said lance.

2. A process according to claim 1 wherein the step of flowing said cooling medium through said jacket further comprises discharging said cooling medium from said jacket so as to substantially surround a jet of feed material exiting from said nozzle.

3. A process according to claim 1 or 2 wherein the step of flowing said cooling medium comprises controlling the velocity of the cooling medium to prevent the temperature in the preferably annular jacket from exceeding 315°C (600°F).

4. A process according to any above claim further comprising the step of controlling the velocity of the feed material leaving the nozzle to 30-300 meters per second (100-1000 feet per second).

5. A process according to any above claim wherein the feed material as it exits the nozzle is in the gas phase, and wherein said process further comprises controlling the velocity of the feed material exiting the nozzle to a level sufficient to cause bubbles of gas phase feed material to form within said molten bath.

6. A process according to any above claim wherein the feed material is liquid, and said process further comprises controlling the pressure drop across the nozzle to at least 1370 K Pa (200 psi).

7. A process according to any above claim wherein the molten metal bath comprises iron, and the feed material comprises hydrocarbons.

8. A process according to any above claim wherein said lance is substantially downwardly directed and passes through a wall of a vessel containing said molten bath.

9. A process according to Claim 1 additionally comprising: a) oxidizing a portion of said CO to CO₂; and b) recycling said CO₂ back to said bath by injecting at least a portion of said CO₂ into said molten metal at a point where said molten metal contains substantial quantities of dissolved carbon, whereby said dissolved carbon reacts with said CO₂ to form approximately two moles of CO for each mole of CO₂, thereby cooling the temperature of said bath.

10. A molten metal bath apparatus for decomposing carbon- and hydrogen-containing feed and producing hydrogen, said apparatus comprising: a gas-impermeable vessel having a top wall and a bottom wall, means for feeding said carbon- and hydrogen-containing feed to said vessel, a molten metal bath within a bottom of said vessel, said molten metal bath being spaced from said top wall, means including said vessel for defining a feed zone within said vessel for receiving said feed and dissolving said carbon and an oxidizing zone within said vessel for receiving materials containing oxygen, a gas-phase in each said zone above the level of said molten metal bath and between the molten metal bath and the top wall of said vessel, wherein said means defining said feed zone and said oxidizing zone comprises:
a. first baffle means mounted within said vessel separating a gas-phase of said feed zone from a gas-phase of said oxidizing zone, said first baffle means extending substantially gas tight downward from said top wall of said vessel and having a lower edge entering, but not extending through, said molten metal bath, so as to separately define said gas-phases of said feed zone and said oxidizing zone;
b. second baffle means mounted within said vessel, spaced from said first baffle means and within said bath, having a downward extension including an upper edge at a level higher than said lower edge of said first baffle means and having an integral, horizontal extension extending substantially horizontally from a lower end of said downward extension and being of a length so as to extend beyond and below the lower edge of said first baffle means, whereby said integral, horizontal extension defines with the bottom wall of said gas-impermeable vessel a lower circulation zone for said molten bath from said feed zone to said oxidizing zone, said first baffle means and said downward extension of said second baffle means partially defines said feed zone and said oxidizing zone, said downward extension and said integral horizontal extension of said second baffle means and said first baffle means define a generally L-shaped recycling zone, whereby molten material from said feed zone containing carbon from said feed may circulate under said horizontal extension of the second baffle means into said oxidizing zone, and wherein liquid from said oxidizing zone, lowered in carbon after contact with oxygen, may flow reversely above the horizontal extension of the second baffle means beneath the lower edge of the first baffle means and rise upwardly between the downward extension of said second baffle means and said first baffle means and over the upper edge of the second baffle means downward extension in a continuous circulation loop back into said feed zone; and
c. said means for feeding said carbon- and hydrogen-containing feed to said vessel comprises a substantially downwardly directed lance having a conduit passing through an upper portion of said gas-impermeable vessel containing said molten bath, said conduit communicating with a nozzle arranged so that a jet of said feed material enters said bath, and causing mixing of the feed material with the bath, and wherein said conduit comprises jacket means by which said conduit is cooled by cooling medium flowing through said jacket means to reduce the increase in temperature of said material as it flows through said conduit and said nozzle toward said molten bath.

11. An apparatus according to Claim 10 additionally comprising means for controlling the velocity of the feed material leaving said conduit to 30-300 meters per second (100-1000 feet per second).

## Patentansprüche

1. Verfahren zur Zersetzung von kohlenstoff- und wasserstoffhaltigem Feedmaterial in einem Metallschmelzbad, das folgendes umfaßt: das Einspritzen des kohlenstoff- und wasserstoffhaltigen Feedmaterials durch eine Lanze in das Schmelzbad, das Lösen von Kohlenstoff in dem Metallbad, und das Einblasen von Sauerstoff unter Erzeugung eines Kohlenmonoxidstroms, der CO aus dem gelösten Kohlenstoff umfaßt; wobei der Schritt des Einspritzens des Feedmaterials in das Bad, das im wesentlichen abwärts gerichtete Einspritzen des Feedmaterials durch eine Lanze umfaßt, die ein unteres Ende aufweist, das sich in das Bad erstreckt, unter ausreichendem Druck, um die Vermischung des Feedmaterials in der Metallschmelze unterhalb der Badoberfläche zu bewirken, wobei das Feedmaterial durch eine Düse in der Lanze eingespritzt wird, die sich unterhalb der Badoberfläche befindet, wobei die Düse mit einer Leitung ausgestattet ist, die im wesentlichen ummantelt ist, und wobei das Verfahren des weiteren das Durchflößen eines Kühlmediums durch den Mantel umfaßt, so daß die Leitung im wesentlichen gekühlt wird und daß das darin fließende Material die Verkohlung jeglichen Kohlenwasserstoffgehalts des Feedmaterials innerhalb der Lanze verhindert.

2. Verfahren gemäß Anspruch 1, wobei der Schritt des Durchflößens des Kühlmediums durch den Mantel ferner das Entladen des Kühlmediums aus dem Mantel umfaßt, so daß ein aus der Düse austretender Feedmaterialstrahl im wesentlichen umgeben wird.

3. Verfahren nach Anspruch 1 oder 2, wobei der Schritt des Durchflößens des Kühlmediums das Steuern der Geschwindigkeit des Kühlmediums umfaßt, um die Überschreitung der Temperatur von 315°C (600°F) in dem vorzugsweise ringförmigen Mantel zu verhindern.

4. Verfahren gemäß irgendeinem der obigen Ansprüche, das ferner den Schritt der Steuerung der Geschwindigkeit des aus der Düse austretenden Feedmaterials auf 30-300 Meter pro Sekunde (100-1000 Fuß pro Sekunde) umfaßt.

5. Verfahren gemäß irgendeinem der obigen Ansprüche, wobei sich das Feedmaterial beim Austritt aus der Düse in der Gasphase befindet, und wobei das Verfahren ferner die Steuerung des aus der Düse austretenden Feedmaterials auf einen ausreichenden Wert umfaßt, so daß sich innerhalb des Schmelzbades Blasen des sich in der Gasphase befindlichen Feedmaterials ausbilden.

6. Verfahren gemäß irgendeinem der obigen Ansprüche, wobei das Feedmaterial flüssig ist, und wobei das Verfahren ferner die Steuerung des Druckabfalls durch die Düse auf wenigstens 1370 kPa (200 psi) umfaßt.

7. Verfahren gemäß irgendeinem der obigen Ansprüche, wobei das Metallschmelzbad Eisen umfaßt und wobei das Feedmaterial Kohlenwasserstoffe umfaßt.

8. Verfahren gemäß irgendeinem der obigen Ansprüche, wobei die Lanze im wesentlichen abwärts ,gerichtet ist und durch eine Wandung eines Gefäßes tritt, das das Schmelzbad enthält.

9. Verfahren nach Anspruch 1, das zusätzlich folgendes umfaßt: a) die Oxidation eines Anteils des CO zu CO₂, und b) die Rückführung des CO₂ zum Bad, indem wenigstens ein Anteil des CO₂ zu einem Zeitpunkt in die Metallschmelze eingeblasen wird, zu dem die Metallschmelze wesentliche Mengen an gelöstem Kohlenstoff enthält, wobei der gelöste Kohlenstoff mit dem CO₂ so reagiert, daß sich ungefähr 2 Mol CO für jedes Mol CO₂ ausbilden, wobei die Temperatur des Bades gekühlt wird.

10. Metallschmelzbadvorrichtung zur Zersetzung von kohlenstoff- und wasserstoffhaltigem Feed und zur Erzeugung von Wasserstoff, wobei die Vorrichtung folgendes umfaßt: ein gasundurchlässiges Gefäß mit einer oberen Wandung und einer unteren Wandung; ein Mittel zum Zuführen des kohlenstoff- und wasserstoffhaltigen Feeds zu dem Gefäß; ein Metallschmelzbad am Boden des Gefäßes, wobei das Metallschmelzbad von der oberen Wandung beabstanded ist; ein Mittel, einschließlich des Gefäßes, um eine Feedzone innerhalb des Gefäßes zur Aufnahme des Feeds und zur Lösung des Kohlenstoffs und eine Oxidationszone zur Aufnahme des sauerstoffhaltigen Materials innerhalb des Gefäßes auszubilden; eine Gasphase in jeder Zone oberhalb dem Pegel des Metallschmelzbades und zwischen dem Metallschmelzbad und der oberen Wandung des Gefäßes, wobei das die Feedzone und die Oxidationszone bildende Mittel folgendes umfaßt:
a. ein erstes im Gefäß angebrachtes Prallblechmittel, das eine Gasphase aus der Feedzonevon einer Gasphase aus der Oxidationszone abtrennt, wobei sich das erste Prallblechmittel im wesentlichen gasdicht von der oberen Wandung des Gefäßes abwärts erstreckt und eine untere Kante aufweist, die in das Metallschmelzbad eindringt, sich jedoch nicht durch dieses hindurch erstreckt, so daß die Gasphasen der Feedzone und der Oxidationszone getrennt ausgebildet werden; "
b. ein zweites im Gefäß angebrachtes Prallblechmittel, das von dem ersten Prallblechmittel beabstanded ist und sich innerhalb des Bades befindet, das einen abwärts gerichteten Fortsatz aufweist und eine obere Kante auf einem Pegel umfaßt, der höher als die untere Kante des ersten Prallblechmittels ist, das einen integralen horizontalen Fortsatz aufweist, der sich im wesentlichen horizontal von einem unteren Ende des abwärts gerichteten Fortsatzes erstreckt und eine solche Länge aufweist, daß er sich unterhalb und über die untere Kante des ersten Prallblechmittels hinaus erstreckt, wodurch der integrale horizontale Fortsatz zusammen mit der unteren Wandung des gasdichten Gefäßes eine untere Umwälzzone für das Schmelzbad von der Feedzone bis hin zur Oxidationszone bildet, wobei das erste Prallblechmittel und der abwärts gerichtete Fortsatz des zweiten Prallblechmittels teilweise die Feedzone und die Oxidationszone bildet, wobei der abwärts gerichtete Fortsatz und der integrale horizontale Fortsatz des zweiten Prallblechmittels und des ersten Prallblechmittels eine allgemein L-förmige Rückführungszone bilden, wodurch das Schmelzmaterial aus der Feedzone, das den Kohlenstoff aus dem Feed enthält, unter dem horizontalen Fortsatz des zweiten Prallblechmittels hindurch in die Oxidationszone hinein zirkulieren kann, und wobei Flüssigkeit aus der Oxidationszone, die nach Kontakt mit Sauerstoff an Kohlenstoff verarmt ist, über den horizontalen Fortsatz des zweiten Prallblechmittels unter der unteren Kante des ersten Prallblechmittels zurückzufließen und zwischen dem abwärtsgerichteten Fortsatz des zweiten Prallblechmittels und dem ersten Prallblechmittel und über die obere Kante des abwärts gerichteten Fortsatzes des zweiten Prallblechmittels, in einer fortwährenden Umwälzungsschleife in die Feedzone zurück aufzusteigen vermag; und
c. wobei das Mittel zur Zuführung des kohlenstoff- und wasserstoffhaltigen Feeds zu dem Gefäß eine im wesentlichen abwärts gerichtete Lanze umfaßt, die eine Leitung aufweist, die durch einen oberen Teil des gasdichten Gefäßes, das das Schmelzbad enthält, hindurchtritt, wobei die Leitung mit einer Düse in Verbindung steht, die so angeordnet ist, daß ein Strahl des Feedmaterials in das Bad gelangt und die Vermischung des Feedmaterials mit dem Bad bewirkt, und wobei die Leitung Ummantelungsmittel umfaßt, durch die die Leitung mittels eines Kühlmittels gekühlt wird, das durch das Ummantelungsmittel fließt, um den Temperaturanstieg des Materials zu vermindern, wenn es durch die Leitung und die Düse zum Schmelzbad fließt.

11. Vorrichtung nach Anspruch 10, die zusätzlich Mittel zur Steuerung der Geschwindigkeit des Feedmaterials, das die Leitung verläßt, auf 30-300 Meter pro Sekunde (100-1000 Fuß pro Sekunde) aufweist.

## Revendications

1. Procédé pour décomposer un matériau de charge contenant du carbone et de l'hydrogène dans un bain de métal en fusion comprenant les étapes consistant à : injecter ledit matériau de charge contenant du carbone et de l'hydrogène à travers une lance dans ledit bain de fusion, dissoudre le carbone dans ledit bain de métal, et injecter de l'oxygène pour créer un courant de monoxyde de carbone comprenant du CO provenant dudit carbone dissous; dans lequel ladite étape consistant à injecter ledit matériau de charge dans ledit bain consiste à injecter ledit matériau de charge principalement vers le bas à travers une lance qui présente une extrémité inférieure plongeant dans ledit bain, sous une pression suffisante pour provoquer le mélange dudit matériau de charge dans ledit métal en fusion en dessous de la surface dudit bain; dans lequel ledit matériau de charge est injecté à travers une buse à l'intérieur de ladite lance sous la surface du bain, dans lequel ladite buse est pourvue d'un conduit qui est substantiellement chemisé, et dans lequel ledit procédé consiste de plus à faire s'écouler un agent de refroidissement à travers ladite chemise de façon à refroidir sensiblement ledit conduit et ledit matériau qui y circule pour empêcher la cokéfaction de tout hydrocarbure contenu dans le matériau de charge à l'intérieur de ladite lance.

2. Procédé selon la revendication 1, dans lequel l'étape consistant à faire s'écouler ledit agent de refroidissement à travers ladite chemise consiste de plus à décharger ledit agent de refroidissement de ladite chemise de telle façon qu'il entoure sensiblement un jet de matériau de charge sortant de ladite buse.

3. Procédé selon la revendication 1 ou 2, dans lequel l'étape consistant à faire s'écouler un agent de refroidissement consiste à régler la vitesse de l'agent de refroidissement pour empêcher la température dans la chemise de préférence annulaire de dépasser 315°C (600°F).

4. Procédé selon l'une quelconque des revendications précédentes, comprenant de plus l'étape consistant à imposer au matériau de charge sortant de la buse une vitesse de 30 à 300 mètres par seconde (100 à 1000 pieds par seconde).

5. Procédé selon l'une quelconque des revendications précédentes, dans lequel le matériau de charge est en phase gazeuse lorsqu'il sort de la buse, et dans lequel ledit procédé consiste de plus à imposer au matériau de charge sortant de la buse une vitesse suffisante pour provoquer la formation de bulles de matériau de charge en phase gazeuse à l'intérieur dudit bain de fusion.

6. Procédé selon l'une quelconque des revendications précédentes, dans lequel le matériau de charge est liquide, et ledit procédé consiste de plus à imposer une chute de pression d'au moins 1370 kPa (200 psi) dans la buse.

7. Procédé selon l'une quelconque des revendications précédentes, dans lequel le bain de métal en fusion contient du fer et le matériau de charge contient des hydrocarbures.

8. Procédé selon l'une quelconque des revendications précédentes, dans lequel ladite lance est dirigée principalement vers le bas et traverse une paroi d'un récipient contenant ledit bain de fusion.

9. Procédé selon la revendication 1, consistant de plus à :
a) oxyder une partie dudit CO en CO₂; et
b) recycler ledit CO₂ en le renvoyant audit bain en injectant au moins une partie dudit CO₂ dans ledit métal en fusion en un endroit où ledit métal en fusion contient des quantités importantes de carbone dissous, ledit carbone dissous réagissant ainsi avec ledit CO₂ pour former approximativement deux moles de CO pour chaque mole de CO₂, ce qui abaisse la température dudit bain.

10. Dispositif à bain de métal en fusion pour décomposer une charge contenant du carbone et de l'hydrogène et produire de l'hydrogène, ledit dispositif comprenant : un récipient imperméable aux gaz présentant une paroi supérieure et une paroi de fond, des moyens pour charger ladite charge contenant du carbone et de l'hydrogène dans ledit récipient dans un bain de métal en fusion dans ledit récipient, un bain de métal en fusion dans un fond dudit récipient, ledit bain de métal en fusion étant espacé de ladite paroi supérieure, des moyens comprenant ledit récipient pour définir une zone de chargement à l'intérieur dudit récipient destinée à recevoir ladite charge et dissoudre ledit carbone et une zone d'oxydation à l'intérieur dudit récipient destinée à recevoir des matériaux contenant de l'oxygène, une phase gazeuse dans chacune desdites zones au dessus du niveau dudit bain de métal en fusion et entre le bain de métal en fusion et la paroi supérieure dudit récipient, dans lequel lesdits moyens définissant ladite zone de chargement et ladite zone d'oxydation comprennent :
a. des premiers moyens de paroi montés à l'intérieur dudit récipient séparant une phase gazeuse de ladite zone de chargement d'une phase gazeuse de ladite zone d'oxydation, lesdits premiers moyens de paroi s'étendant vers le bas de façon fortement étanche aux gaz à partir de ladite paroi supérieure dudit récipient et présentant un bord inférieur pénétrant mais ne s'étendant pas à travers ledit bain de métal en fusion, de façon à définir en les séparant lesdites phases gazeuses de ladite zone de chargement et de ladite zone d'oxydation;
b. des seconds moyens de paroi montés à l'intérieur dudit récipient, espacées desdits premiers moyens de paroi et à l'intérieur dudit bain, présentant un prolongement vers le bas comprenant un bord supérieur à un niveau supérieur à celui du bord inférieur desdits premiers moyens de paroi et comprenant un prolongement horizontal faisant corps avec eux s'étendant sensiblement horizontalement à partir d'une extrémité inférieure dudit prolongement vers le bas et d'une longueur telle qu'il s'étende au-delà et en dessous du bord inférieur desdits premiers moyens de paroi, ledit prolongement horizontal faisant corps définissant avec la paroi de fond dudit récipient imperméable aux gaz une zone de circulation inférieure pour ledit bain de fusion allant de ladite zone de chargement à ladite zone d'oxydation, lesdits premiers moyens de paroi et ledit prolongement vers le bas desdits seconds moyens de paroi définissant partiellement ladite zone de chargement et ladite zone d'oxydation, ledit prolongement vers le bas et ledit prolongement horizontal faisant corps desdits seconds moyens de paroi et lesdits premiers moyens de paroi définissent une zone de recyclage de forme générale en L, du matériau en fusion provenant de ladite zone de chargement contenant du carbone provenant de ladite charge pouvant circuler sous ledit prolongement horizontal desdits seconds moyens de paroi jusque dans ladite zone d'oxydation, et dans lequel du liquide provenant de ladite zone d'oxydation, appauvri en carbone après contact avec l'oxygène, peut circuler en sens inverse au dessus du prolongement horizontal des seconds moyens de paroi sous le bord inférieur des premiers moyens de paroi et s'élever entre le prolongement vers le bas desdits seconds moyens de paroi et lesdits premiers moyens de paroi et au dessus du bord supérieur du prolongement vers le bas des seconds moyens de paroi suivant une boucle de circulation continue le ramenant dans ladite zone de chargement; et
c. lesdits moyens pour charger ladite charge contenant du carbone et de l'hydrogène dans ledit récipient comprennent une lance dirigée principalement vers le bas possédant un conduit traversant une partie supérieure dudit récipient imperméable aux gaz contenant ledit bain de fusion, ledit conduit communiquant avec une buse disposée de façon qu'un jet de matériau de charge pénètre dans ledit bain et provoquant le mélange du matériau de charge avec le bain, et dans lequel ledit conduit comprend des moyens de chemise à l'aide desquels ledit conduit est refroidi au moyen d'un agent de refroidissement circulant dans lesdits moyens de chemise pour réduire l'augmentation de température dudit matériau lorsqu'il s'écoule à travers ledit conduit et ladite buse vers ledit bain de fusion.

11. Dispositif selon la revendication 10, comprenant de plus des moyens pour imposer au matériau de charge sortant dudit conduit une vitesse de 30 à 300 mètres par seconde (100 à 1000 pieds par seconde).
